# DEMANDE DE BREVET EUROPEEN

(11) **EP 3 747 590 A1**
(43) Date de publication de la demande: **09.12.2020**
(21) Numéro de dépôt: 20178034.3
(22) Date de dépôt: 03.06.2020
(51) Int. Cl.: B23P 15/00, B23K 1/00, B23K 1/19, B23K 35/00, C04B 37/02, B23K 20/02, B23K 20/233, B23K 20/227, B23K 20/16, B23K 20/24

(54) **PROCÉDÉ D'ASSEMBLAGE D'UNE PIÈCE EN CÉRAMIQUE AVEC UNE PIÈCE MÉTALLIQUE**

(30) Priorité: 07.06.2019 FR 1906099
(71) Demandeur: Commissariat à l'énergie atomique et aux énergies alternatives, 75015 Paris (FR)
(72) Inventeur: SASSOULAS, Hervé, 38054 CEDEX 09 (FR); BRISSONNEAU, Laurent, 13770 VENELLES (FR); MABROUK, Assia, 13115 Saint-Paul-Lez Durance (FR)
(74) Mandataire: Brevalex

(57) **Abrégé**

Procédé d'assemblage comprenant les étapes suivantes :
a) Fournir une pièce en céramique oxyde (1) et une pièce métallique (2) comprenant, de préférence, du nickel et/ou du fer.
b) Disposer une pièce intermédiaire (3), comprenant un métal de transition du groupe 4 ou un de ces alliages, entre la pièce en céramique (1) et la pièce métallique (2), le coefficient de dilatation thermique de la pièce intermédiaire (3) étant inférieur à celui de la pièce métallique (2) et proche de celui de la pièce en céramique (1), la rigidité de la pièce intermédiaire (3) étant supérieure à celle de la pièce métallique (2),
c) Déposer une brasure (10) entre la pièce en céramique (1) et la pièce intermédiaire (3),
d) Former un joint de brasage (20) entre la pièce en céramique (1) et la pièce intermédiaire (3),
e) Fixer la pièce intermédiaire (3) avec la pièce métallique (2).

## Description

### DOMAINE TECHNIQUE

La présente invention se rapporte à un procédé d'assemblage d'une pièce en céramique oxyde avec une pièce métallique, comprenant de préférence du fer et/ou du nickel, par exemple une pièce en acier ou base nickel.

Plus particulièrement, les deux pièces sont assemblées par l'intermédiaire d'une pièce en métal de transition ou en alliage d'un métal de transition, le métal de transition étant un métal de transition du groupe 4, notamment Ti ou Zr. La pièce intermédiaire est fixée à la pièce en céramique par brasage et à la pièce métallique par brasage ou mécaniquement.

L'invention concerne également l'assemblage ainsi obtenu.

L'invention peut trouver, notamment, des applications dans le domaine de l'automobile.

### ÉTAT DE LA TECHNIQUE ANTÉRIEURE

Pour braser une pièce métallique sur une pièce en céramique, diverses solutions peuvent être envisagées.

Une première solution consiste à métalliser préalablement de la céramique, pour favoriser le mouillage d'une autre brasure. Cependant, une pré-métallisation de la céramique peut conduire à une infiltration en profondeur du métal dans la céramique, et donc à une dégradation de ces propriétés d'électrolyte.

Une autre solution consiste à utiliser une brasure en verre ou en vitrocéramique. Cependant, les joints à base de verre sont très fragiles notamment vis-à-vis du cyclage thermique et présentent une mauvaise tenue dans des milieux à haute température et/ou très réducteur et/ou soumis à de fortes pressions.

### EXPOSÉ DE L'INVENTION

Un but de la présente invention est de proposer un procédé permettant d'obtenir un assemblage métal-céramique présentant une bonne tenue mécanique, une jonction étanche, et une longue durée de vie dans des milieux à haute température et/ou très réducteur et/ou soumis à de fortes pressions.

Pour cela, la présente invention propose un procédé d'assemblage d'une pièce en céramique avec une pièce métallique comprenant les étapes suivantes :
a) Fournir une pièce en céramique oxyde, et une pièce métallique, comprenant, de préférence, du nickel et/ou du fer,
b) Disposer une pièce intermédiaire entre la pièce en céramique et la pièce métallique,
   la pièce intermédiaire étant en un métal de transition du groupe 4 ou en un de ces alliages,
   le coefficient de dilatation thermique de la pièce intermédiaire étant proche du coefficient de dilatation thermique de la céramique et inférieur au coefficient de dilatation thermique de la pièce métallique,
   la rigidité de la pièce intermédiaire étant supérieure à celle de la pièce métallique,
c) Déposer un apport de brasure entre la pièce en céramique et la pièce intermédiaire,
d) Amener l'apport de brasure à une température suffisante de manière à le faire fondre pour former un joint de brasage entre la pièce en céramique et la pièce intermédiaire,
e) Fixer la pièce intermédiaire avec la pièce métallique.

L'invention se distingue fondamentalement de l'art antérieur par l'utilisation d'une pièce intermédiaire en métal de transition ou en un alliage de métal de transition. La pièce intermédiaire est, d'une part, brasée sur la pièce en céramique et, d'autre part, fixée sur la pièce métallique. Comme le coefficient de dilatation thermique de la pièce intermédiaire est inférieur au coefficient de dilatation thermique de la pièce métallique, lors du refroidissement du joint de brasage, les contraintes thermiques dans la céramique et/ou dans le joint de brasage sont réduites par rapport aux procédés de l'art antérieur.

Par coefficient de dilatation thermique proche, on entend que les coefficients de dilatation thermique ne varient pas de plus de 30% et de préférence pas plus de 20%.

Avantageusement, la pièce intermédiaire a une rigidité significativement supérieure à celle de la pièce métallique. La pièce intermédiaire joue le rôle de tampon entre la pièce métallique et la pièce en céramique : elle absorbe les contraintes mécaniques.

Par une rigidité significativement supérieure, on entend que la pièce intermédiaire a une rigidité au moins 3 fois supérieure, et de préférence au moins 5 fois supérieure, à celle de la pièce métallique. La rigidité d'un matériau peut être quantifiée par le module d'Young.

L'assemblage ainsi obtenu présente des propriétés mécaniques améliorées.

Le procédé de l'invention permet de réaliser un assemblage étanche présentant de bonnes propriétés mécaniques. L'interface céramique-pièce intermédiaire est dépourvue de fissuration.

La pièce intermédiaire est, avantageusement, protégée de la corrosion par la pièce métallique.

La pièce intermédiaire peut être également protégée de la corrosion par un dépôt métallique, par exemple du nickel.

Le procédé est simple à mettre en œuvre.

Avantageusement, le matériau de la pièce intermédiaire et le matériau de la pièce en céramique ont des coefficients de dilatation thermique qui ne varient pas de plus de 30% et préférentiellement ils ne varient pas de plus de 20%.

Selon un premier mode de réalisation avantageux, l'étape e) est réalisée par brasage.

Selon un autre mode de réalisation avantageux, l'étape e) est réalisée sans apport de brasure.

Selon un autre mode de réalisation avantageux, l'étape e) est réalisée par assemblage mécanique.

La céramique est une céramique oxyde. Par céramique oxyde, on entend une céramique comprenant majoritairement un métal ou plusieurs métaux et de l'oxygène. De préférence, il s'agit d'une céramique oxyde possédant un seul degré d'oxydation.

Avantageusement, la pièce en céramique est en hafnie stabilisée à l'oxyde de calcium (aussi nommée hafnie calciée), à l'oxyde d'yttrium (aussi nommée hafnie yttriée), ou à l'oxyde de gadolinium. La pièce en céramique peut également être en thorine éventuellement dopée au calcium ou à l'yttrium. Il peut également s'agir de zircone stabilisée, partiellement ou totalement, au calcium ou à l'yttrium, ou encore d'alumine.

La pièce métallique présente, avantageusement, des propriétés de tenue à la corrosion. Elle est, avantageusement, apte à être utilisée dans un milieu oxydant ou réducteur, par exemple dans de l'air chaud.

Avantageusement, la pièce métallique est en acier inoxydable, par exemple ferritique ou austénitique, ou en un alliage à base nickel.

Par base nickel, on entend que le nickel est l'élément prépondérant, pouvant aller par exemple de 50 à 80% massique. Ces matériaux sont très résistants à la corrosion même sous contrainte.

Avantageusement, le métal de transition est du zirconium ou du titane.

Une association particulièrement avantageuse est la suivante :
- une céramique oxyde, ayant de préférence un seul degré d'oxydation,
- un insert en métal de transition du groupe 4 (notamment Zr ou Ti) ou en un de ces alliages, pouvant réduire la céramique oxyde et pouvant former un eutectique, et
- une pièce métallique contenant du fer et/ou du nickel, notamment un acier ou une base nickel.

Selon une première alternative, l'apport de brasure de l'étape c) est en nickel ou en un alliage contenant au moins 50% massique de nickel. Selon ce mode de réalisation, l'étape d) est, avantageusement, réalisée à une température allant de 980°C à 1060°C et de préférence de 1000°C à 1040°C.

Selon une autre alternative, l'apport de brasure de l'étape c) est en cuivre ou en un alliage contenant au moins 50% massique de cuivre. Selon ce mode de réalisation, l'étape d) est, avantageusement, réalisée à une température allant de 930°C à 990° et de préférence de 950°C à 970°C. L'utilisation d'un apport de brasure à base de cuivre permet de diminuer la température de brasage par rapport à un apport de brasure à base de nickel.

Avantageusement, l'étape c) est réalisée sous vide secondaire et/ou sous atmosphère neutre (pression partielle d'oxygène inférieure à 10⁻⁴ mbar). Par vide secondaire, on entend un vide allant d'environ 10⁻⁶ mbar à environ 10⁻⁴ mbar.

L'invention concerne également un assemblage obtenu selon le procédé précédemment décrit, l'assemblage comprenant une pièce en céramique, une pièce métallique, une pièce intermédiaire en un métal de transition ou en un alliage de métal de transition, un joint de brasage étant disposé entre la pièce en céramique et la pièce intermédiaire, le coefficient de dilatation thermique de la pièce intermédiaire étant inférieur au coefficient de dilatation thermique de la pièce métallique, la rigidité de la pièce intermédiaire étant supérieure à celle de la pièce métallique.

L'assemblage selon l'invention présente une bonne stabilité mécanique, durable dans le temps et est étanche au niveau du joint de brasage. L'insert permet d'améliorer la liaison de l'assemblage et donc la tenue mécanique, par rapport à une pièce sans insert.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente, de manière schématique, en coupe et de profil, une pièce en céramique, une pièce intermédiaire et une pièce métallique à assembler, selon un mode de réalisation particulier de l'invention,
La figure 2 représente, de manière schématique, en coupe et de profil, une pièce en céramique, une pièce intermédiaire et une pièce métallique à assembler, selon un autre mode de réalisation particulier de l'invention,
Les figures 3A et 3B représentent, de manière schématique, en coupe, deux pièces à braser et un apport de brasure en configuration dite « sandwich », selon différents modes de réalisation particulier de l'invention,
La figure 4 représente, de manière schématique, en coupe, deux pièces à braser et un apport de brasure en configuration dite « capillaire », selon un autre mode de réalisation particulier de l'invention,
La figure 5 représente, de manière schématique, en trois dimensions, deux tubes disposés pour être assemblés par brasage réactif en configuration dite capillaire, selon un autre mode de réalisation particulier de l'invention,
La figure 6 est un graphique représentant la température en fonction du temps lors d'une étape de brasage, selon un mode de réalisation particulier de l'invention,
La figure 7 est un cliché photographique représentant un tube en hafnie yttriée brasé avec un tube en zirconium, avec un apport de brasure en un alliage de nickel, selon un mode de réalisation particulier de l'invention,
Les figures 8 et 9 sont des clichés obtenus par microscopie électronique à balayage, au niveau d'un joint de brasage d'un assemblage hafnie yttriée / zirconium obtenu avec un apport de brasure en un alliage de nickel, selon un mode de réalisation particulier de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

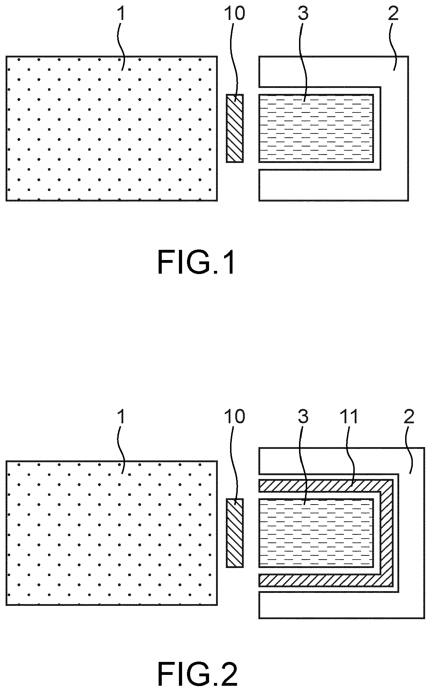

On se réfère en premier aux figures 1 et 2. Le procédé d'assemblage d'une pièce en céramique 1 avec une pièce métallique 2 comprenant les étapes suivantes :
a) Fournir une pièce en céramique 1 et une pièce métallique 2,
b) Disposer une pièce intermédiaire 2, en un métal de transition ou en un de ces alliages, entre la pièce en céramique 1 et la pièce métallique 2, le coefficient de dilatation thermique de la pièce intermédiaire 3 étant proche de celui de la pièce 1 et inférieur à celui de la pièce métallique 2, la rigidité de la pièce intermédiaire 3 étant supérieure à celle de la pièce métallique 2,
c) Déposer un apport de brasure 10 entre la pièce en céramique 1 et la pièce intermédiaire 3,
d) Faire fondre l'apport de brasure 10 pour former un joint de brasage 20 entre la pièce en céramique 1 et la pièce intermédiaire 3,
e) Fixer la pièce intermédiaire 3 à la pièce métallique 2.

La pièce en céramique 1 fournie à l'étape a) est, de préférence, une céramique oxyde avec un seul degré d'oxydation. On choisira, par exemple, une céramique oxyde pouvant jouer le rôle d'un électrolyte.

La pièce en céramique 1 est, préférentiellement, en hafnie yttriée ou calciée, en thorine pouvant être yttriée ou calciée, en zircone yttriée ou calciée ou encore en alumine.

Par hafnie yttriée, on entend un matériau composé d'au moins 50% massique de HfO₂-Y₂O₃, et de préférence au moins 90% massique de HfO₂-Y₂O₃ et, encore plus préférentiellement, au moins 95% de HfO₂-Y₂O₃.

Par hafnie calciée, on entend un matériau composé d'au moins 50% massique de HfO₂-CaO, et de préférence au moins 90% massique de HfO₂-CaO et, encore plus préférentiellement, au moins 95% de HfO₂-CaO contenant au plus 33% de CaO massique par rapport au HfO₂.

Par zircone yttriée, on entend un matériau composé d'au moins 50% massique de ZrO₂-Y₂O₃, et de préférence au moins 90% massique de ZrO₂-Y₂O₃ et, encore plus préférentiellement, au moins 95% de ZrO₂-Y₂O₃.

Les pourcentages restant peuvent correspondre à un ou plusieurs autres oxydes entrant dans la composition de la céramique. Ces éléments permettent de modifier les propriétés des céramiques (conductivité ionique, tenue mécanique, ...). La céramique peut également être renforcée par des particules d'autres matériaux, par des fibres d'Al₂O₃ par exemple.

Préférentiellement, l'hafnie yttriée comprend de 0,5% à 30% massique d'oxyde d'yttrium.

Préférentiellement, la zircone yttriée comprend de 0,5% à 20% massique d'oxyde d'yttrium.

Préférentiellement, la zircone calciée comprend de 0,5% à 20% massique d'oxyde de calcium.

Préférentiellement, l'hafnie calciée comprend de 0,5% à 20% massique d'oxyde de calcium.

La pièce en céramique 1 peut être de toute forme. De préférence, il s'agit d'un tube.

Par pièce métallique 2, on entend une pièce en un métal ou en un alliage de métaux, comprenant de préférence du fer et/ou du nickel. Préférentiellement, la pièce métallique 2 est en acier inoxydable ou en un alliage à base nickel. De préférence, la pièce métallique présente une bonne résistance à la corrosion.

La pièce métallique 2 peut être de toute forme. De préférence, il s'agit d'un tube.

L'assemblage de la pièce métallique 2 et de la pièce en céramique 1 est rendu possible, par l'utilisation, d'une pièce intermédiaire 3, disposée entre la pièce en céramique 1 et la pièce métallique 2 (étape b). On choisira, avantageusement, une pièce intermédiaire (insert) 3 pouvant s'insérer dans la pièce métallique 2, de manière à ce que la pièce métallique 2 la recouvre complètement, pour la protéger notamment de l'oxydation.

Par exemple, la pièce intermédiaire 3 et la pièce métallique 2 sont des tubes. La pièce intermédiaire 3 a, par exemple, un diamètre externe inférieur au diamètre interne de la pièce métallique 2.

La pièce intermédiaire 3 est en un métal de transition ou en un alliage d'un métal de transition. Par alliage d'un métal de transition, on entend que l'alliage comprend au moins 50% massique d'un ou plusieurs métaux de transition.

Il s'agit d'un métal de transition du groupe 4 du tableau périodique (aussi référencé groupe IVA ou groupe IVB). De préférence, le métal de transition est Zr, Hf ou Ti.

On choisit la pièce intermédiaire 3 de telle sorte que son coefficient de dilatation thermique est inférieur à celui de la pièce métallique 2. Le coefficient de dilatation thermique de la pièce intermédiaire 3 peut être supérieur ou inférieur à celui de la pièce en céramique 1 mais proche de celle-ci (environ 20% d'écart au maximum).

A titre illustratif, le tableau suivant indique des coefficients de dilatation thermique, entre 20°C et 900°C, pour différents matériaux.

| | |
|---|---|
| Alumine | 8,1×10⁻⁶ par °C |
| Zircone | 8,9 × 10⁻⁶ par °C |
| Zircone stabilisée yttrine | 11 × 10⁻⁶ par °C |
| Hafnie | 7,5 × 10⁻⁶ par °C |
| Thorine | 8,7 × 10⁻⁶ par °C |
| Acier inoxydable ferritique | 12,7 × 10⁻⁶ par °C |
| Acier inoxydable austénitique | 19,6 × 10⁻⁶ par °C |
| Alliage inconel 718 | 17,2 × 10⁻⁶ par °C |
| Titane | 10,2 × 10⁻⁶ par °C |
| Zirconium | 7,4 × 10⁻⁶ par °C |

Les coefficients de dilatation thermique des céramiques sont nettement plus faibles que ceux des aciers inoxydables (en particulier austénitiques) ou des bases nickel. Les coefficients de dilatation des métaux de transition et, en particulier, du zirconium, sont plus proches des coefficients des céramiques.

Ainsi, la pièce intercalaire 3 peut protéger la pièce en céramique 1 du retrait de la pièce métallique 2 lors du refroidissement, après l'étape de brasage.

Avantageusement, la pièce intermédiaire 3 possède une rigidité mécanique supérieure à celle de la pièce métallique 2. De préférence, elle est au moins 3 fois supérieure et encore plus préférentiellement, elle est au moins 5 fois supérieure.

La pièce intermédiaire 3 est, par exemple, en titane ou en un alliage de titane. La pièce intermédiaire 3 est, par exemple, en Ti6Al4V.

On choisit, de préférence, une pièce intermédiaire 3 en zirconium pour le brasage de l'hafnie yttriée. Il s'agit, par exemple, de Zircaloy-4 (Zy-4).

Lors de l'étape c), on dispose un alliage de brasage 10 (aussi dénommé apport de brasure, fondant ou brasure initiale) en contact avec la pièce en céramique 1 et la pièce intermédiaire 3.

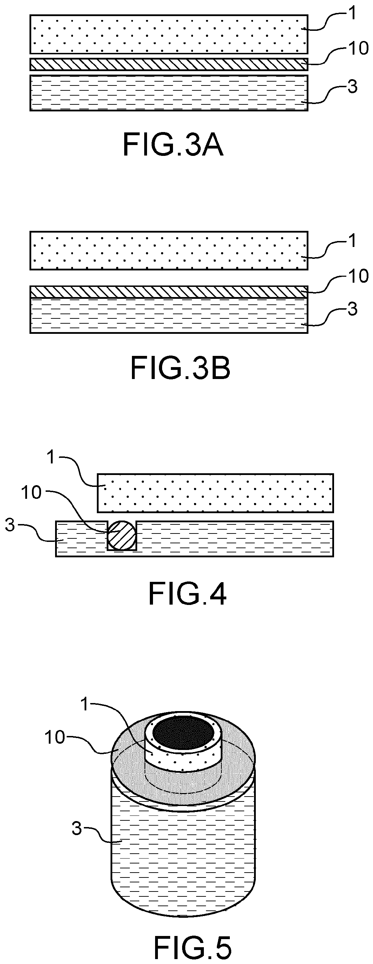

Selon une première variante de réalisation, les pièces à assembler peuvent être positionnés en configuration dite sandwich, i.e. les faces des deux pièces 1 et 3 à assemble à assembler sont mises face à face (figures 3a et 3b). L'apport de brasure 10 est placé entre les faces des éléments 1 et 3. Les faces à braser sont ensuite mises en contact.

Selon une autre variante de réalisation, les pièces à assembler 1 et 3 peuvent être mises en contact en configuration dite capillaire (figures 4 et 5), i.e. les pièces à assembler 1 et 3 sont mises en contact sans avoir mis d'apport de brasure en contact avec la totalité de la surface des faces à assembler. L'apport de brasure 10 peut être disposé sous la forme d'un réservoir en périphérie du joint à braser ou dans une rainure agencée dans la pièce intermédiaire 3.

L'apport de brasure 10 peut être sous la forme d'une poudre, d'un fil, ou encore d'une feuille ou d'un empilement de feuilles (figure 3a) ou d'un dépôt (figure 3b) réalisé sur l'une et/ou l'autre des deux pièces à assembler. L'apport de brasure 10, sous forme de poudre, peut aussi être mélangé avec un liant afin de former une pâte.

Lors de l'étape d), pour réaliser le joint de brasure 20, on réalise un traitement thermique. Le traitement thermique, réalisé au-dessus du point de fusion de l'eutectique le plus bas de la brasure initiale 10, permet de faire fondre cette dernière 10 qui après refroidissement forme un joint de brasage 20 liant mécaniquement les deux éléments 1 et 3.

Le cycle thermique de brasage comporte successivement : une montée en température, un palier à la température de brasage (palier dit haut) et une rampe de refroidissement jusqu'à une température inférieure à la température de fusion de la brasure. De préférence, le refroidissement est réalisé jusqu'à la température ambiante. Par température ambiante, on entend une température de l'ordre de 20-25°C.

Le palier à la température de brasage est, par exemple, de l'ordre de la dizaine de minutes (de 10 minutes à 30 minutes par exemple).

La température de brasage est inférieure aux températures de fusion des matériaux à assembler. Plus particulièrement, elle est supérieure à la température théorique de l'eutectique (métal de transition-apport de brasure) le plus bas. Ceci permet d'enrichir en métal de transition le liquide présent à l'interface.

Avantageusement, on réalise un brasage à température modérée pour limiter les contraintes thermomécaniques dues au refroidissement après le cycle d'assemblage. L'assemblage réalisé pourra être utilisé jusqu'à des températures de l'ordre de 900°C.

On choisira, avantageusement, une température de palier supérieure d'au moins 40°C à la température de formation de l'eutectique. Par exemple, pour un apport de brasure 10 en nickel pur, on choisira un palier de l'ordre de 1000°C, et pour un apport de brasure 10 en cuivre, on choisira une température de palier de l'ordre de 930°C.

Le brasage réalisé étant de type actif, on travaillera, de préférence, dans un environnement dépourvu d'oxygène, par exemple, en brasant sous vide secondaire (par exemple à une pression totale de 10⁻⁵ mbar) ou sous gaz neutre purifié en oxygène.

L'hafnie et la thorine sont des céramiques particulièrement stables et très difficiles à réduire en comparaison d'autres céramiques comme Al₂O₃ ou ZrO₂. De manière inattendue, il a été observé, notamment, que le zirconium réduit ces céramiques et que l'oxygène issu de cette réduction se dissout dans la brasure 20.

Le zirconium est, non seulement, un élément actif capable de réduire partiellement à chaud une céramique, mais il permet aussi d'obtenir une composition de brasure capable de former, par exemple, avec le nickel, le cuivre et le fer des eutectiques au-dessous de 1000°C.

Par jonction mécaniquement forte, on entend un assemblage dont la tenue mécanique est du même ordre de grandeur que celle des matériaux massifs assemblés. La rupture d'un tel assemblage se produira au sein des matériaux assemblés (rupture dite cohésive), et non pas au niveau des interfaces (rupture dite adhésive).

L'absence d'une couche d'oxyde du métal de transition du groupe 4 à l'interface avec la céramique 1 est assurée par la dilution suffisante de ce métal dans l'élément de brasure 10 et/ou la durée du cycle de brasage pour former cette couche.

Lors de l'étape e), on fixe la pièce intermédiaire 3 à la pièce métallique 2 de manière à solidariser mécaniquement les deux pièces l'une à l'autre. Ces deux pièces peuvent être soit assemblées mécaniquement, soit solidarisées via un joint de brasage.

Cette étape peut être réalisée simultanément à l'étape d), préalablement ou ultérieurement à l'étape d).

La pièce intermédiaire 3 peut être fixée à la pièce métallique 2 par une étape de brasage (figure 2). Pour cela, on positionne un autre apport de brasure 11 entre la pièce intermédiaire 3 et la pièce métallique 2. On choisira des températures compatibles avec les différents matériaux (pièce métallique 2, pièce en céramique 1, pièce intermédiaire 3, apports de brasure 10, 11). Le deuxième apport de brasure 11 peut avoir une composition identique ou différente de celle du premier apport de brasure 10. Les deux brasages peuvent être réalisés simultanément ou de manière séquentielle.

On peut aussi ne pas utiliser d'apport de brasure entre ces deux pièces 2 et 3. Il s'agit alors d'un procédé de soudage diffusion.

Selon un autre mode de réalisation, la pièce métallique 2 est fixée mécaniquement à la pièce intermédiaire 3 par assemblage mécanique.

Le procédé a été précédemment décrit pour assembler une pièce métallique 2 avec une pièce en céramique 1. Le procédé peut être utilisé pour assembler plusieurs pièces, par exemple une pièce en céramique et deux pièces métalliques, simultanément ou de manière séquentielle.

Le procédé d'assemblage va maintenant être décrit au moyen de l'exemple suivant, donné, bien entendu, à titre illustratif et non limitatif.

### Exemple illustratif et non limitatif d'un mode de réalisation :

Dans cet exemple, on assemble par brasage, une pièce en hafnie yttriée 1 avec une pièce en zirconium 3.

La pièce en hafnie yttriée 1 est un tube de diamètre extérieur 10 mm en position interne.

La pièce en zirconium 3 est un tube de diamètre extérieur 12,5 mm en position externe. La géométrie est axisymétrique.

Le fondant 10, ou apport de brasure (fondant), est introduit sous la forme d'un fil de diamètre 0,45 mm, d'une longueur de 7 mm. Il s'agit d'un fil de Ni201.

Le fondant 10 est disposé aux deux extrémités de la zone de brasage (un tour de fil à chaque extrémité, introduit dans une gorge).

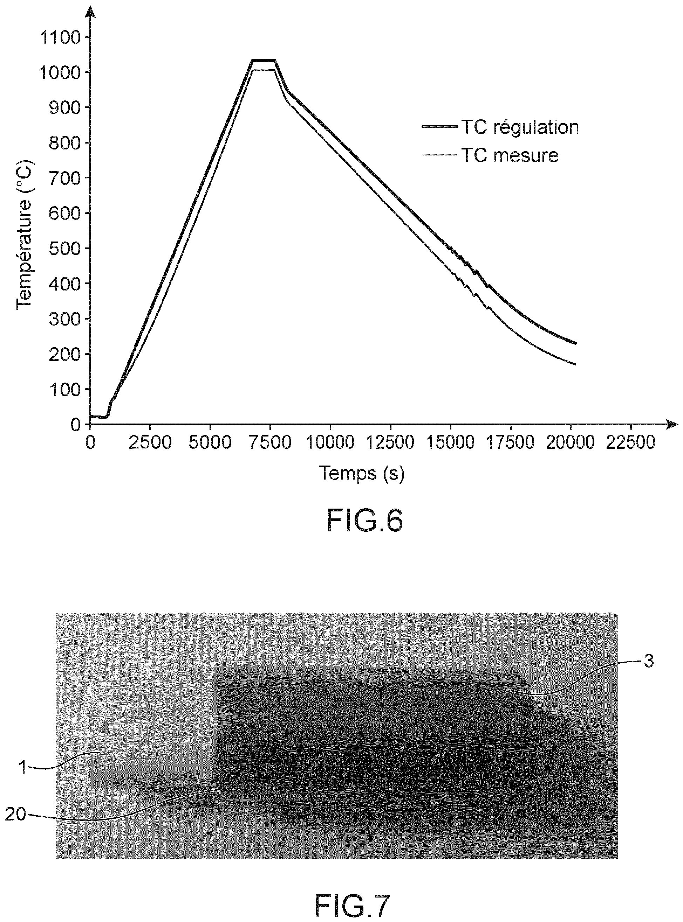

Le cycle thermique réalisé pour le brasage est représenté sur le graphique de la figure 6. Il comporte un palier de 15 minutes à une température de brasage de 1035°C.

L'assemblage obtenu est représenté sur la figure 7.

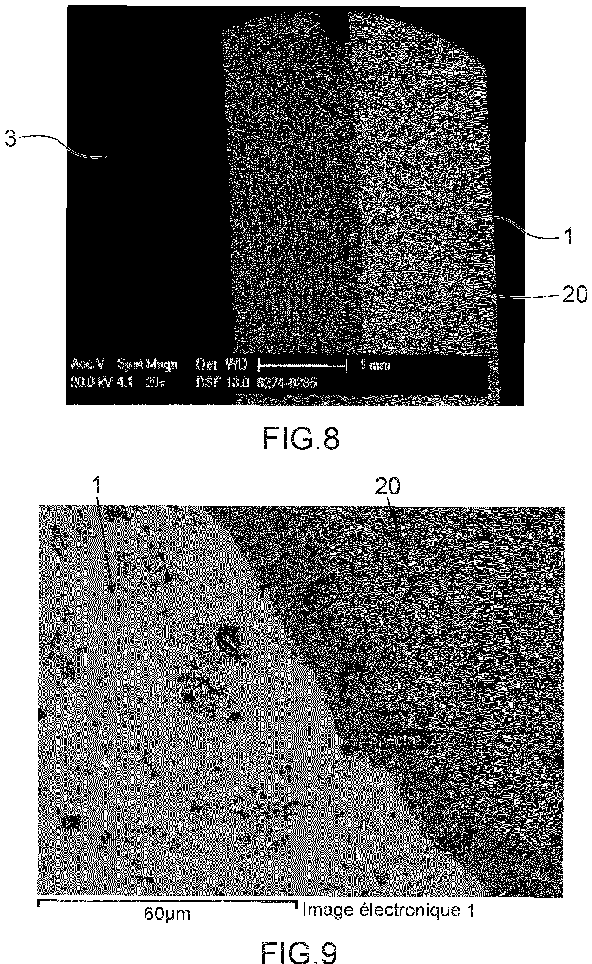

L'observation de la structure de la zone de liaison montre l'absence de fissuration interfaciale (figures 8 et 9). On distingue, de gauche à droite pour la figure 8 et de droite à gauche pour la figure 9, le tube extérieur de zirconium, la zone de brasure, et le tube interne en hafnie yttriée.

Une forte réserve de zirconium pur est observée à proximité de l'interface. Une dilution suffisante du tube de zirconium dans la brasure qui se forme durant le palier à haute température, ainsi que l'attirance plus forte pour l'oxygène du zirconium que du nickel, aboutit à cette configuration, qui s'est avérée favorable à une absence de fissuration à l'interface brasure - céramique.

## Revendications

1. Procédé d'assemblage d'une pièce en céramique (1) avec une pièce métallique (2) comprenant les étapes suivantes :
a) Fournir une pièce en céramique oxyde (1) et une pièce métallique (2) comprenant, de préférence, du nickel et/ou du fer,
b) Disposer une pièce intermédiaire (3) entre la pièce en céramique (1) et la pièce métallique (2), la pièce intermédiaire (3) étant en un métal de transition du groupe 4 ou en un de ces alliages, le coefficient de dilatation thermique de la pièce intermédiaire (3) étant inférieur au coefficient de dilatation thermique de la pièce métallique (2) et proche du coefficient de dilatation thermique de la pièce en céramique (1), la rigidité de la pièce intermédiaire (3) étant supérieure à la rigidité de la pièce métallique (2),
c) Déposer un apport de brasure (10) entre la pièce en céramique (1) et la pièce intermédiaire (3),
d) Amener l'apport de brasure (10) à une température suffisante pour former un joint de brasage (20) entre la pièce en céramique (1) et la pièce intermédiaire (3),
e) Fixer la pièce intermédiaire (3) avec la pièce métallique (2).

2. Procédé selon la revendication 1, **caractérisé en ce que** l'étape e) est réalisée par brasage.

3. Procédé selon la revendication 1, **caractérisé en ce que** l'étape e) est réalisée sans apport de brasure.

4. Procédé selon la revendication 1, **caractérisé en ce que** l'étape e) est réalisée mécaniquement.

5. Procédé selon l'une quelconque des revendications précédentes, **caractérisé en ce que** la pièce en céramique (1) est en hafnie yttriée ou calciée, en thorine possiblement yttriée ou calciée, en zircone yttriée ou calciée ou encore en alumine.

6. Procédé selon l'une quelconque des revendications précédentes, **caractérisé en ce que** la pièce métallique (2) est en acier inoxydable ou en un alliage à base nickel.

7. Procédé selon l'une quelconque des revendications 1 à 6, **caractérisé en ce que** le métal de transition est du zirconium.

8. Procédé selon l'une quelconque des revendications 1 à 6, **caractérisé en ce que** le métal de transition du titane.

9. Procédé selon l'une des revendications 5 à 7, **caractérisé en ce que** la pièce en céramique (1) est en hafnie yttriée ou calciée, en thorine possiblement yttriée ou calciée, en zircone yttriée ou calciée ou encore en alumine et **en ce que** le métal de transition est du zirconium.

10. Procédé selon l'une des revendications 1 à 6, **caractérisé en ce que** la pièce métallique (2) est en un alliage à base nickel et **en ce que** la pièce intermédiaire (3) est en Zr, Hf ou Ti.

11. Procédé selon l'une quelconque des revendications 1 à 10, **caractérisé en ce que** l'apport de brasure (10) de l'étape c) est en nickel ou en un alliage contenant au moins 50% massique de nickel.

12. Procédé selon l'une quelconque des revendications 1 à 10, **caractérisé en ce que** l'apport de brasure (10) de l'étape c) est en cuivre ou en un alliage contenant au moins 50% massique de cuivre.

13. Procédé selon l'une quelconque des revendications précédentes, **caractérisé en ce que** l'étape c) est réalisée sous vide secondaire et/ou sous atmosphère neutre.

14. Assemblage obtenu selon l'une quelconque des revendications 1 à 13, comprenant successivement :
- une pièce en céramique oxyde (1),
- un joint de brasage (20)
- une pièce intermédiaire (3) en un métal de transition du groupe 4 ou en un de ces alliages,
- une pièce métallique (2) comprenant, de préférence, du nickel et/ou du fer,
le coefficient de dilatation thermique de la pièce intermédiaire (3) étant proche du coefficient de dilatation thermique de la pièce en céramique (1) et inférieur au coefficient de dilatation thermique de la pièce métallique (2),
la rigidité de la pièce intermédiaire (3) étant supérieure à la rigidité de la pièce métallique (2).

15. Assemblage selon la revendication 14, **caractérisé en ce que** la pièce en céramique (1) est en hafnie yttriée ou calciée, en thorine possiblement yttriée ou calciée, en zircone yttriée ou calciée ou encore en alumine et **en ce que** le métal de transition est du zirconium.
